# EUROPÄISCHE PATENTSCHRIFT

(11) **EP 1 133 096 B1**
(45) Veröffentlichungstag und Bekanntmachung des Hinweises auf die Patenterteilung: **01.02.2006**
(21) Anmeldenummer: 01250049.2
(22) Anmeldetag: 13.02.2001
(51) Int. Cl.: H04L 1/00, G06F 11/08

(54) **Verfahren zur signaltechnisch sicheren Übermittlung von Daten zwischen signaltechnisch sicheren Rechnern sowie Einrichtung hierzu**
Method and system for fail-safe data transfer between fail-safe computers
Procédé et système de transmission de données a sûreté intégrée entre des ordinateurs à sécurité intrinsèque

(30) Priorität: 07.03.2000 DE 10011887
(43) Veröffentlichungstag der Anmeldung: 12.09.2001
(73) Patentinhaber: SIEMENS AKTIENGESELLSCHAFT, 80333 München (DE)
(72) Erfinder: Gerken, Stefan, 38116 Braunschweig (DE); Mund, Sibylle, 12557 Berlin (DE); Peters, Harald, 38124 Braunschweig (DE)

(56) Entgegenhaltungen:
- EP-A- 0 978 775
- DE-A- 19 532 639
- US-A- 4 456 997
- US-A- 4 736 376

## Beschreibung

Die Erfindung bezieht sich auf ein Verfahren sowie auf eine Einrichtung nach dem Oberbegriff des Patentanspruches 1.

Ein solches Verfahren ist aus der DT 20 17 853 B2 bekannt. Dort geht es um ein Steuerverfahren für prozessrechnergesteuerte Eisenbahnsignalanlagen mit zwei die gleichen Eingangsdaten verarbeitenden Kommandoeinheiten. Beide Kommandoeinheiten erarbeiten die zu übertragenden Informationsteile und die zugehörigen Prüfteile. Die Ausgänge beider Kommandoeinheiten sind in einer Verknüpfungseinheit zusammengefasst, die so beschaffen ist, dass sie nur wahlweise den Informationsteil von der einen Kommandoeinheit und den Prüfteil von der anderen Kommandoeinheit zu einem Befehlsempfänger übermittelt. Der Befehlsempfänger prüft, ob der ihm jeweils übermittelte Informationsteil mit dem ihm übermittelten Prüfteil zusammenpasst und erkennt nur für diesen Fall die übermittelte Information als wahr an.

In der vorgenannten DT-B2 ist zwar über die Beschaffenheit der Kommandoeinheiten und des Befehlsempfängers nichts weiter ausgeführt; die Sicherung der Datenverarbeitung und -übertragung nach dem offenbarten Verfahren ist aber nur gewährleistet, wenn neben den Nutzdaten, hier als Informationsteil bezeichnet, auch die zugehörige Prüfdaten, hier mit Prüfteil bezeichnet, signaltechnisch sicher erzeugt und empfangsseitig signaltechnisch sicher überprüft werden, d. h. bei diesen Kommandoeinheiten und Befehlsempfängern handelt es sich um signaltechnisch sichere Rechner. Diese sind so geschaffen, dass etwaige Bauteile- oder Verarbeitungsfehler frühzeitig erkannt und fehlerhafte Ausgaben zum Prozess hin unterbunden werden können; hierzu vergleichen sich die sende- und empfangsseitig jeweils zusammenwirkenden Rechnerpaare laufend auf Übereinstimmung.

Die signaltechnisch sichere Erzeugung des Prüfteils einer zu übermittelnden Information in einem signaltechnisch sicheren Rechner erfordert dort notwendigerweise eine gewisse Hard-und Software. Dies belastet den signaltechnisch sicheren Rechner bei der Bearbeitung der Nutzdaten, d. h. dieser Rechner wird um so langsamer, je aufwändiger die Prüfdaten auszugestalten sind. Von Nachteil ist auch, dass die Programme zur Bildung der Prüfinformationen, wenn sie im signaltechnisch sicheren Rechner laufen, als Teil des signaltechnisch sicheren Rechners angesehen werden, für die ein Sicherheitsnachweis zu erbringen ist. Dieser Sicherheitsnachweis ist zeitaufwändig und kostenintensiv und gilt nur in Verbindung mit einer bestimmten Rechnerausprägung, d. h. unterschiedlich ausgeprägte signaltechnisch sichere Rechner, etwa die unterschiedlicher Hersteller, erfordern für die Implementierung der Programme zum Generieren von Prüfdaten gesonderte Sicherheitsnachweise.

Die DE 195 32 639 A1 beschreibt eine spezielle Ausgestaltung einer Verknüpfungseinheit, über die Nutz- und Prüfdaten zweier Rechner an eine Senke übermittelt werden können. Durch konstruktive Maßnahmen ist dabei sichergestellt, dass die zu übermittelnden Daten stets aus beiden Kanälen einer speisenden Quelle bereitgestellt werden.

Aufgabe der Erfindung ist es, ein Verfahren nach dem Oberbegriff des Patenanspruches 1 anzugeben, mit dem es möglich ist, den oder die signaltechnisch sicheren Rechner zum Erzeugen der Nutzdaten weitestgehend zu entlasten von der Erzeugung zugehöriger Prüfdaten; dennoch sollen natürlich etwaige Zuordnungs- oder Übertragungsfehler senkeseitig signaltechnisch sicher erkannt werden können, wobei aber auch auf der Senkeseite der Aufwand zum Feststellen derartiger Fehler minimiert sein soll. Es ist ferner Aufgabe der Erfindung, eine entsprechend ausgestaltete Einrichtung zur Realisierung des erfindungsgemäßen Verfahrens anzugeben.

Die Erfindung löst die ihr gestellte Aufgabe durch die Anwendung der Merkmale des Patentanspruches 1 bzw. des Patentanspruches 7. Danach werden die den Nutzdaten jeweils beizugebenden Prüfdaten weitgehend außerhalb der signaltechnisch sicheren Rechner in signaltechnisch nicht sicheren Rechnern generiert und in den signaltechnisch sicheren Rechnern lediglich komplettiert. Auf der Senkeseite werden in gleicher Weise aus den übermittelten Nutzdaten Prüfdaten gebildet und mit den übertragenen Prüfdaten auf Übereinstimmung geprüft. Durch diese Maßnahme wird die Generierung von Prüfdaten bis auf einen ganz geringen Teil aus den signaltechnisch sicheren Rechnern in handelsübliche Rechner verlagert, ohne dass sich hierdurch ein Verlust an Sicherheit einstellt. Für die Generierung der Prüfdaten, soweit sie außerhalb der signaltechnisch sicheren Rechner stattfindet, bedarf es keines Sicherheitsnachweises; lediglich der letzte, vorzugsweise wenig aufwändige Berechnungsschritt innerhalb der signaltechnisch sicheren Rechner ist innerhalb des Sicherheitsnachweises für diesen Rechner dahingehend zu prüfen, dass er keinerlei Auswirkungen auf andere Programme des sicheren Rechners hat. Die Sicherheit für das Erkennen etwaiger Verarbeitungsfehler innerhalb der signaltechnisch nicht sicheren Rechner liegt darin begründet, dass sowohl die quelleseitig als auch die senkeseitig gebildeten Prüfdaten signaltechnisch sicher modifiziert werden, so dass bei fehlerhafter Berechnung von Prüfdaten, seien sie quelleseitig oder senkeseitig, dies senkeseitig vom dortigen signaltechnisch sicheren Rechner erkannt werden kann, indem er die den übermittelten Prüfdaten quelleseitig beigegebenen, durch den dortigen signaltechnisch sicheren Rechner komplettierten Prüfdaten mit den senkeseitig aus den übermittelten und im senkeseitigen signaltechnisch sicheren Rechner komplettierten Nutzdaten vergleicht.

Vorteilhafte Ausgestaltungen und Weiterbildungen der Erfindung sind in den Unteransprüchen angegeben. Als besonders vorteilhaft wird dabei angesehen, dass die Generierung der Prüfdaten mindestens überwiegend in kommerziellen Rechnern stattfindet, über die auch die Datenübertragung erfolgen kann. Bevorzugte Anwendung der Erfindung ist die Datenübertragung zwischen spurgeführten Fahrzeugen und/oder zwischen spurgeführten Fahrzeugen und ortsfesten Steuereinrichtungen, beispielsweise streckenseitigen Stelleinrichtungen oder einer Leitstelle.

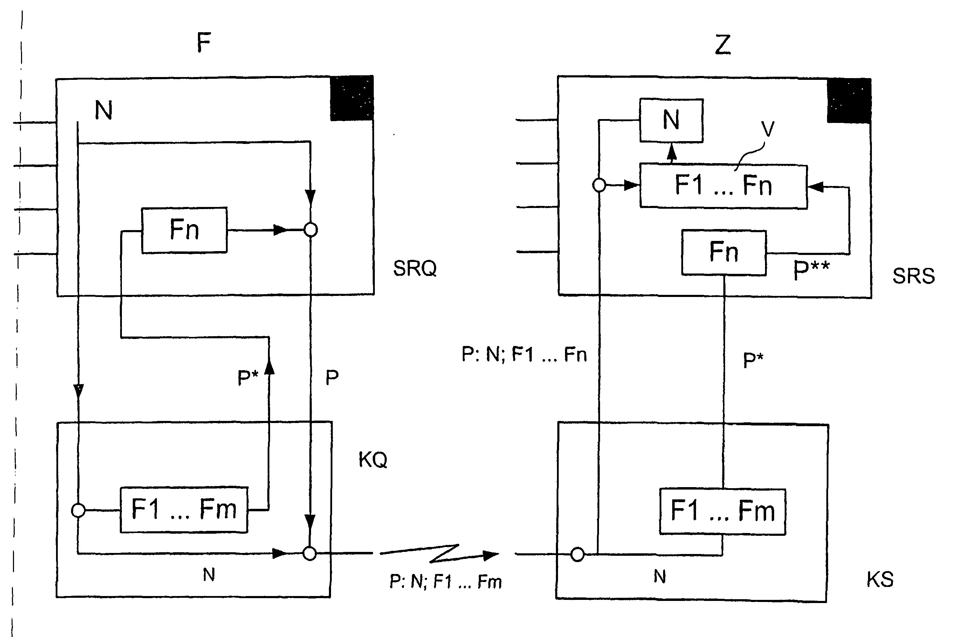

Die Erfindung ist nachstehend anhand eines in der Zeichnung verdeutlichten Ausführungsbeispieles näher erläutert. Die Zeichnung zeigt schematisch zwei signaltechnisch sichere Rechner SRQ und SRS, die z. B. auf einem Fahrzeug F und in einer Zentrale Z angeordnet sind. Das Fahrzeug F soll zum betrachteten Zeitpunkt die Quelle darstellen, von der aus Daten an die Zentrale Z übertragen werden sollen; die Zentrale stellt somit die Senke des Datenübertragungssystems dar. Die signaltechnisch sicheren Rechner sind in bekannter Weise zweikanalig ausgeführt; sie vergleichen sich laufend auf Überbereinstimmung und führen ereignisunabhängige Prüfprogramme zum frühzeitigen Aufdecken von Verarbeitungsfehlern aus. Die Datenübertragung soll drahtlos über eine hier nicht näher ausgeführte kommerzielle bidirektionale Kommunikationsverbindung geschehen. Sie kann sowohl zweikanalig als auch einkanalig verfahrensgesichert ausgeführt sein. Verfahren zur signaltechnisch sicheren Datenübertragung sind bekannt, beispielsweise aus der DE 41 25 812 A1.

Wie vorstehend angenommen, hat das Fahrzeug F Nutzdaten N an die Zentrale Z zu übermitteln. Dies soll in an sich bekannter Weise unter Beiordnung von Prüfdaten P gesehen, wobei deren Zusammengehörigkeit in der Zentrale Z überprüft werden soll. Die Beiordnung der Prüfdaten P zu den quelleseitigen Nutzdaten N geschieht erfindungsgemäß nur zu einem sehr kleinen Teil im signaltechnisch sicheren Rechner SRQ, überwiegend aber außerhalb des sicheren Rechners in einem kommerziellen, nicht sicher ausgeführten Rechner oder Controller, der in der Zeichnung als Kommunikationsrechner KQ bezeichnet ist. Hierzu werden die Nutzdaten N vor ihrer Aufschaltung auf den Kommunikationskanal an den Kommunikationsrechner KQ übertragen. Im Kommunikationsrechner werden aus den Nutzinformationen Prüfdaten P* gebildet, nachfolgend als Prüfdatenfragmente bezeichnet, die in dieser Form aber nicht dem Kommunikationskanal zugeführt werden. Sie werden vielmehr an den sicheren Rechner SRQ übermittelt, der die Prüfinformationen P* in vorgegebener Weise abschließend modifiziert und daraus die zu übermittelnden Prüfdaten P bildet. Diese Prüfdaten P werden dann über den Kommunikationskanal an die Senke übermittelt.

Die an die Senke zu übermittelnden Prüfdaten werden in an sich bekannter Weise in mehreren Berechnungsschritten F1 bis Fn aus den zugehörigen Nutzdaten N gebildet. Jeder Berechnungsschritt baut auf dem vorangegangenen Berechnungsschritt auf und verwendet dessen Ausgangsgröße als Eingangsgröße. Der letzte Berechnungsschritt findet erfindungsgemäß im signaltechnisch sicheren Rechner statt und bezieht damit in die zu übermittelnden Prüfdaten sämtliche im zugehörigen nicht sicheren Kommunikationsrechner ausgeführten Berechnungsschritte mit in die Prüfdaten ein. Der signaltechnisch sichere Rechner stellt sicher, dass die zu übermittelnden Prüfdaten auch tatsächlich den gemeinsam mit ihnen zu übermittelnden Nutzdaten zugeordnet sind. Dies geschieht z. B. durch Einbeziehung von Sequenznummern oder Zeitstempeln in die zu übermittelnden Nutzdaten, sodass senkeseitig auch für den Fall, dass der Kommunikationsrechner KQ fehlerbedingt z. B. nicht aktuelle, aber den sonstigen vorgegebenen Sicherungsbedingungen genügende Nutz- und Prüfdaten an die Senke übermitteln würde, dort die fehlerhaft übermittelten Daten als solche erkennbar wären. Auch die ausschließliche Übermittlung von Nutzdaten in Verbindung mit nicht aktuellen Prüfdaten oder ohne Prüfdaten würde vom signaltechnisch sicheren Rechner SRS der Datensenke erkannt werden.

Der im signaltechnisch sicheren Rechner SRQ durchzuführende Berechnungsschritt Fn sollte möglichst wenig umfangreich sein und keinerlei Variablen zusätzlich zum jeweiligen Prüfdatenfragment P* berücksichtigen. Dadurch wird erreicht, dass der Hard- und Softwareaufwand für die Fertigstellung der zu übermittelnden Prüfdaten im signaltechnisch sicheren Rechner möglichst wenig aufwändig gestaltet wird, mit der Folge, dass die für die Bildung der Prüfdaten insgesamt erforderliche Zeit verkürzt wird gegenüber einer vollständiger Generierung der Prüfdaten im sicheren Rechner; außerdem verringert sich bei entsprechend niedrigem Aufwand für die Hardware und die Software auch der Aufwand zum Führen des Sicherheitsnachweises der im sicheren Rechner implementierten Komponente für die Datensicherung.

Auf der Empfangsseite des Übertragungssystems ist ein dem Kommunikationsrechner KQ der Sendeseite entsprechender Kommunikationsrechner KS vorgesehen. Der Kommunikationsrechner KS übermittelt die ihm übermittelten Nutz- und Prüfdaten N; F1...Fn an den sicheren Rechner SRS der Zentrale, die diese Daten aber zunächst nicht weiter behandelt. Außerdem führt der Kommunikationsrechner KS die übermittelten Nutzdaten N einer weiteren Verarbeitung zu, in der diese den gleichen Berechnungsschritten F1 bis Fm unterzogen werden wie im quelleseitigen Kommunikationsrechner KQ. Die ermittelten Prüfdatenfragmente P* werden sodann vom Kommunikationsrechner KS an den sicheren Rechner SRS der Zentrale fortgeschaltet. Dort findet über die im Kommunikationsrechner KS gebildeten Prüfdatenfragmente P* der gleiche Berechungsschritt Fn statt, der auch im sicheren Fahrzeugrechner SRQ vorgenommen wurde.

Unter der Voraussetzung, dass quelleseitig die jeweils zusammengehörigen Nutz- und Prüfdaten auf den Kommunikationskanal geschaltet wurden (realisiert durch die Einbeziehung des sicheren Rechners SRQ in den Datenfluss), dass auf dem Übertragungsweg weder eine Verfälschung der übermittelten Nutz- noch der übermittelten Prüfdaten stattgefunden hat und dass auch bei der Durchführung der im nicht sicheren Kommunikationsrechner KS vorgenommenen Berechnung der Prüfdatenfragmente P* kein Fehler aufgetreten ist, bestimmt der signaltechnisch sichere Rechner SRS als endgültige Prüfdaten P** eine Datenfolge, die identisch ist zu den ihm vom Kommunikationsrechner KS in Verbindung mit den Nutzdaten übermittelten Prüfdaten P. Wird bei einem signaltechnisch sicher durchgeführten Vergleich die Übereinstimmung zwischen den von der Quelle zugeführten und den an der Senke gebildeten Prüfdaten festgestellt, so prüft der sicheren Rechner SRS abschließend, ob die so festgestellten Prüfdaten P, P** zu den übermittelten Nutzdaten N passen und anerkennt zutreffendenfalls die Nutzdaten.

Die von der Quelle stammenden Nutz- und Prüfdaten müssen dem signaltechnisch sicheren Rechner der Senke vom Kommunikationsrechner KS nicht unbedingt auf gesonderten Kanälen zur Verfügung gestellt werden, sondern können ihm zeitlich entkoppelt oder im zeitlichen Zusammenhang mit den von ihm ermittelten Prüfdatenfragmenten P* auch einkanalig übermittelt werden.

Durch die, wenn auch nur marginale Einbeziehung sowohl der quelle- als auch der senkeseitigen signaltechnisch sicheren Rechner in die Ermittlung der den Nutzdaten beigegebenen Prüfdaten und durch den gegenseitigen Vergleich der Prüfdaten wird erreicht, dass durch beliebige Fehler bei der Datenübertragung oder der Berechnung der Prüfdaten dies empfangsseitig sicher detektiert werden kann. Dies geschieht mit einem Minimum an Aufwand in den signaltechnisch sicheren Rechnern. Die Berechnung der Prüfdaten geschieht zum überwiegenden Teil in den sehr viel schnelleren kommerziellen Kommunikationsrechnern, die darüber hinaus auch die Übermittlung von Daten zwischen der Quelle und der Senke beschleunigen.

Das erfindungsgemäße Verfahren kann mit Vorteil nicht nur zwischen einzelnen Quellen und Senken, sondern zwischen einer Vielzahl von Quellen und Senken verwendet sein, wobei diese Quellen und Senken z. B. durch Busleitungen miteinander verbunden sein können oder aber wie im dargestellten Ausführungsbeispiels drahtlos miteinander kommunizieren.

Es ist auch möglich, die Funktion der Datenkommunikation von der Funktion der Berechnung von Prüfdaten zu trennen und hierfür jeweils eigene signaltechnisch nicht sichere Rechner zu verwenden.

Desgleichen ist es möglich, in den signaltechnisch nicht sicheren Rechnern nach einem an sich bekannten Verfahren die den Nutzdaten jeweils beizugebenden Prüfdaten vollständig zu berechnen und im jeweils zugehörigen signaltechnisch sicheren Rechner über die so gebildeten Prüfdaten einen zusätzlichen Berechnungsschritt auszuführen. Dieser zusätzliche Berechnungsschritt muss selbstverständlich sowohl bei der Quelle als auch bei der Senke stattfinden. Eine solche Ausgestaltung der Erfindung hätte den Vorteil, dass für die Berechnung der Prüfdaten am Markt verfügbare Rechner oder Controller verwendet werden können, die in gar keiner Weise zur Ausführung des erfindungsgemäßen Verfahrens an dieses anzupassen wären.

## Patentansprüche

1. Verfahren zur signaltechnisch sicheren Übermittlung von Nutzdaten zwischen zwei signaltechnisch sicheren Rechnern (SRQ, SRS) eines Rechnersystems durch quelleseitige Generierung von Prüfdaten (P) aus den Nutzdaten anhand eines Prüfdatenalgorithmus mit mehreren aufeinander aufbauenden Berechnungsschritten, Übermittlung der Prüf- und der Nutzdaten (P, N) an eine Senke und senkeseitige Überprüfung der Nutzdaten (N) anhand der übermittelten und nach dem gleichen Prüfdatenalgorithmus selbst aus den Nutzdaten (N) abgeleiteten Prüfdaten,
**gekennzeichnet durch** die sowohl quelleals auch senkeseitige Ausführung eines ersten Teils der Berechnungsschritte (F1...Fm) in signaltechnisch nicht sicheren Kommunikationsrechnern (KQ, KS),
Ausführung des oder der restlichen Berechnungsschritte (Fn) im zugehörigen sichern Rechner (SRQ, SRS)
sowie Vergleich der im sicheren Rechner (SRS) der Senke komplettierten Prüfdaten (P**) mit den übermittelten Prüfdaten (P) im sicheren Rechner der Senke (SRS).

2. Verfahren nach Anspruch 1,
**dadurch gekennzeichnet,**
**dass** quelleseitig in die Nutzdaten (N) alle variablen Daten mit Ausnahme der Prüfdaten (P) integriert werden, die senkeseitig für das Entschlüsseln und Anerkennen der Nutzdaten (N) erforderlich sind.

3. Verfahren nach Anspruch 1 oder 2,
**dadurch gekennzeichnet,**
**dass** die Nutz- und die Prüfdaten (N, P) zweikanalig oder einkanalig nach einem gesicherten Verfahren von der Quelle zur Senke übertragen werden.

4. Verfahren nach Anspruch 3,
**dadurch gekennzeichnet,**
**dass** die vom sicheren Rechner (SRQ) der Quelle bereitgestellten Nutz- und Prüfdaten (N, P) unter Verwendung signaltechnisch nicht sicherer Datenübertragungseinrichtungen an ein kommerzielles Kommunikationsnetz ausgegeben bzw. aus diesem entnommen werden.

5. Verfahren nach einem der Ansprüche 1 bis 4,
**dadurch gekennzeichnet,**
**dass** die unvollständig berechneten Prüfdaten (P*) von den nicht sicheren Kommunikationsrechnern (KQ, KS) zur Durchführung der restlichen Bearbeitungsschritte an die sicheren Rechner (SRQ, SRS) übertragen werden.

6. Anwendung des Verfahrens nach einem der Ansprüche 1 bis 5 für die Datenübertragung zwischen spurgeführten Fahrzeugen (F) und/oder zwischen spurgeführten Fahrzeugen (F) und mindesten einer ortsfesten Steuereinrichtung (Z) oder zwischen zwei ortsfesten Steuereinrichtungen (Z).

7. Einrichtung zur signaltechnisch sicheren Übermittlung von Nutzdaten zwischen zwei signaltechnisch sicheren Rechnern (SRQ, SRS) eines Rechnersystems, wobei ein quelleseitiger Rechner (KQ,SRQ) der einen sicheren Rechner und einen nicht sicheren Kommunikationsrechner enthält, angepasst ist zur Generierung von Prüfdaten (P) aus den Nutzdaten anhand eines Prüfdatenalgorithmus mit mehreren aufeinander aufbauenden Berechnungsschritten, Übermittlung der Prüf- und der Nutzdaten (P, N) an einen senkeseitigen Rechner (KS,SRS), der einen sicheren Rechner und einen nicht sicheren Kommunikationsrechner enthält, der angepasst ist zur Überprüfung der Nutzdaten (N) anhand der übermittelten und nach dem gleichen Prüfdatenalgorithmus selbst aus den Nutzdaten (N) abgeleiteten Prüfdaten (P),
**dadurch gekennzeichnet,**
**dass** dem quelleseitigen signaltechnisch nicht sicheren Kommunikationsrechner (KQ) die Nutzdaten (N) zuführbar sind,
**dass** dieser Kommunikationsrechner (KQ) angepasst ist, um nur einen ersten Teil der Berechnungsschritte (F1... Fm) zum Bestimmen der Prüfdaten (P) aus den Nutzdaten auszuführen und im Anschluss daran entsprechend unvollständige Prüfdatenfragmente (P*) an den quelleseitigen sicheren Rechner (SRQ) zu übermitteln,
**dass** der quellenseitige sichere Rechner (SRQ) angepasst ist, um den oder die restlichen Berechnungsschritte (Fn) mindestens über die übermittelten Prüfdatenfragmente (P*) auszuführen und die danach vorliegenden Prüfdaten (P) zur gemeinsamen Übermittlung von Nutz- und Prüfdaten (N, P) an den signaltechnisch nicht sicheren Kommunikationsrechner der Quelle (KQ) zur Übermittlung an den entsprechenden nicht sicheren Kommunikationsrechner (KS) der Senke zu übermitteln,
**dass** der senkeseitige nicht sicher Kommunikationsrechner (KS) angepasst ist, um aus den übermittelten Nutzdaten (N) die zugehörigen Prüfdatenfragmente (P*) zu bilden und diese sowie die empfangenen Nutz- und Prüfdaten (N, P) an den senkeseitigen signaltechnisch sicheren Rechner (SRS) zu übermitteln
und **dass** dieser Rechner (SRS) angepasst ist, um die fehlenden Berechnungsschritte (Fn) über die Prüfdatenfragmente (P*) oder die Nutz- und die Prüfdatenfragmente (N, P*) auszuführen und die so gewonnenen Prüfdaten (P**) zur Anerkennung der übermittelten Nutzdaten (N) mit den übermittelten Prüfdaten zu (P) vergleichen.

8. Einrichtung nach Anspruch 7,
**dadurch gekennzeichnet,**
**dass** jeweils gemeinsame signaltechnisch nicht sichere Kommunikationsrechner (KQ, KS) angepasst sind für die Übermittlung der Nutz- und der Prüfdaten (N, P) sowie für die Berechnung der Prüfdatenfragmente (P*).

9. Einrichtung nach Anspruch 7,
**dadurch gekennzeichnet,**
**dass** ein gemeinsamer Kanal oder gesonderte Kanäle für die Übertragung der den Nutzdaten (N) beigegebenen Prüfdaten (P) aus dem senkeseitigen nicht sicheren Kommunikationsrechner (KS) sowie für die Übertragung der dort berechneten unvollständigen Prüfdaten (P*) an den senkeseitigen sichern Rechner (SRS) vorgesehen sind.

## Claims

1. Method for transferring useful data, with secure signalling, between two computers (SRQ, SRS) - which have secure signalling - of a computer system by generating, at the source end, check data (P) from the useful data using a check data algorithm having a plurality of calculation steps which build on one other, transferring the check and useful data (P, N) to a sink and checking the useful data (N) at the sink end using the check data which have been transferred and are derived from the useful data (N) in accordance with the same check data algorithm itself,
**characterized by** the execution, both at the source end and at the sink end, of a first part of the calculation steps (F1...Fm) in communication computers (KQ, KS) which do not have secure signalling,
execution of the remaining calculation step(s) (Fn) in the associated secure computer (SRQ, SRS),
and comparison, in the secure computer (SRS) of the sink, of the check data (P**) which have been completed in the secure computer (SRS) of the sink with the check data (P) which have been transferred.

2. Method according to Claim 1,
**characterized in that**
all variable data, with the exception of the check data (P) which are needed, at the sink end, to decrypt and recognize the useful data (N), are integrated in the useful data (N) at the source end.

3. Method according to Claim 1 or 2,
**characterized in that**
the useful and check data (N, P) are transmitted from the source to the sink using two channels or one channel in accordance with a secure method.

4. Method according to Claim 3,
**characterized in that**
the useful and check data (N, P) provided by the secure computer (SRQ) of the source are output to a commercial communication network or are taken from the latter using data transmission devices which do not have secure signalling.

5. Method according to one of Claims 1 to 4,
**characterized in that**
the check data (P*) which have not been completely calculated are transmitted from the communication computers (KQ, KS) which are not secure to the secure computers (SRQ, SRS) in order to carry out the remaining processing steps.

6. Use of the method according to one of Claims 1 to 5 to transmit data between track-guided vehicles (F) and/or between track-guided vehicles (F) and at least one stationary control device (Z) or between two stationary control devices (Z).

7. Device for transferring useful data, with secure signalling, between two computers (SRQ, SRS) - which have secure signalling - of a computer system, a computer (KQ, SRQ) which is at the source end and contains a secure computer and a communication computer that is not secure being adapted to generate check data (P) from the useful data using a check data algorithm having a plurality of calculation steps which build on one other, and to transfer the check and useful data (P, N) to a computer (KS, SRS) which is at the sink end, contains a secure computer and a communication computer which is not secure and is adapted to check the useful data (N) using the check data (P) which have been transferred and are derived from the useful data (N) in accordance with the same check data algorithm itself,
**characterized in that**
the useful data (N) can be supplied to the communication computer (KQ) which is at the source end and does not have secure signalling,
**in that** this communication computer (KQ) is adapted to execute only a first part of the calculation steps (F1 ... Fm) for determining the check data (P) from the useful data and to then transfer check data fragments (P*) which are correspondingly incomplete to the secure computer (SRQ) at the source end,
**in that** the secure computer (SRQ) at the source end is adapted to execute the remaining calculation step(s) (Fn) at least using the check data fragments (P*) which have been transferred and to transfer the check data (P) which are then present and are intended for the joint transfer of useful and check data (N, P) to the communication computer (KQ) - which does not have secure signalling - of the source in order to be transferred to the corresponding communication computer (KS) - which is not secure - of the sink,
**in that** the communication computer (KS) which is at the sink end and is not secure is adapted to form the associated check data fragments (P*) from the useful data (N) which have been transferred and to transfer said check data fragments and the useful and check data (N, P) which have been received to the computer (SRS) which has secure signalling at the sink end,
and **in that** this computer (SRS) is adapted to execute the missing calculation steps (Fn) using the check data fragments (P*) or the useful and check data fragments (N, P*) and to compare the check data (P**) which have been obtained in this manner and are intended to recognize the transferred useful data (N) with the check data (P) which have been transferred.

8. Device according to Claim 7,
**characterized in that**
respective common communication computers (KQ, KS) which do not have secure signalling are adapted to transfer the useful and check data (N, P) and to calculate the check data fragments (P*).

9. Device according to Claim 7,
**characterized in that**
a common channel or separate channels is/are provided for transmitting the check data (P) - which are added to the useful data (N) - from the communication computer (KS) which is at the sink end and is not secure and for transmitting the incomplete check data (P*) which are calculated there to the secure computer (SRS) at the sink end.

## Revendications

1. Procédé de transmission de données utiles à sécurité intégrée entre deux ordinateurs à sécurité intrinsèque (SRQ, SRS) d'un système informatique par génération côté source de données de test (P) à partir des données utiles à l'aide d'un algorithme de données de test comportant plusieurs étapes de calcul basées les unes sur les autres, par transmission des données de test et utiles (P, N) à un collecteur et par vérification côté collecteur des données utiles à l'aide des données de test transmises et des données de test déduites selon le même algorithme de données de test à partir des données utiles (N),
**caractérisé par** l'exécution aussi bien côté source que côté collecteur d'une première partie des étapes de calcul (F1 à Fm) dans des ordinateurs de communication (KQ, KS) qui ne sont pas à sécurité intrinsèque,
par l'exécution de l'étape de calcul restante ou des étapes de calcul restantes (Fn) dans l'ordinateur à sécurité intrinsèque (SRQ, SRS) associé
ainsi que par la comparaison des données de test (P**) complétées dans l'ordinateur à sécurité intrinsèque (SRS) du collecteur aux données de test transmises (P) dans l'ordinateur à sécurité intrinsèque (SRS) du collecteur.

2. Procédé selon la revendication 1,
**caractérisé par le fait que**, du côté de la source, on intègre dans les données utiles (N) toutes les données variables, à l'exception des données de test (P), qui sont nécessaires côté collecteur au décryptage et à la reconnaissance des données utiles (N).

3. Procédé selon la revendication 1 ou 2,
**caractérisé par le fait qu'**on transmet les données utiles et de test (N, P) de la source au collecteur, sur deux canaux ou sur un canal, selon un procédé sécurisé.

4. Procédé selon la revendication 3,
**caractérisé par le fait que** les données utiles et de test (N, P) fournies par l'ordinateur à sécurité intrinsèque (SRQ) de la source sont délivrées à un réseau de communication commercial ou sont prélevées sur celui-ci en utilisant des dispositifs de transmission de données qui ne sont pas à sécurité intrinsèque.

5. Procédé selon l'une des revendications 1 à 4,
**caractérisé par le fait que**, pour la mise en oeuvre des étapes de traitement restantes, les données de test incomplètement calculées (P*) sont transmises par les ordinateurs de communication (KQ, KS) qui ne sont pas à sécurité intrinsèque aux ordinateurs à sécurité intrinsèque (SRQ, SRS).

6. Application du procédé selon l'une des revendications 1 à 5 pour la transmission de données entre des véhicules sur rails (F) et/ou entre des véhicules sur rails (F) et au moins un dispositif de commande stationnaire (Z) ou entre deux dispositifs de commande stationnaires (Z).

7. Dispositif pour la transmission de données utiles à sécurité intégrée entre deux ordinateurs à sécurité intrinsèque (SRQ, SRS) d'un système informatique, un ordinateur côté source (KQ, SRQ), contenant un ordinateur à sécurité intrinsèque et un ordinateur de communication qui n'est pas à sécurité intrinsèque, étant adapté à la génération de données de test (P) à partir des données utiles à l'aide d'un algorithme de données de test comportant plusieurs étapes de calcul basées les unes sur les autres et à la transmission des données de test et utiles (P, N) à un ordinateur côté collecteur (KS, SRS), contenant un ordinateur à sécurité intrinsèque et un ordinateur de communication qui n'est pas à sécurité intrinsèque, qui est adapté à la vérification des données utiles (N) à l'aide des données de test (P) transmises et des données de test (P) déduites selon le même algorithme de données de test à partir des données utiles (N),
**caractérisé par le fait que**
les données utiles (N) peuvent être envoyées à l'ordinateur de communication côté source (KQ) qui n'est pas à sécurité intrinsèque,
cet ordinateur de communication (KQ) est adapté pour exécuter seulement une première partie des étapes de calcul (F1 à Fm) destinées à la détermination des données de test (P) à partir des données utiles puis pour transmettre des fragments de données de test donc incomplets (P*) à l'ordinateur côté source (SRQ) à sécurité intrinsèque,
l'ordinateur côté source (SRQ) à sécurité intrinsèque est adapté pour exécuter la ou les étapes de calcul restantes (Fn) au moins sur les fragments de données de test transmis (P*) puis pour transmettre les données de test ensuite présentes (P) en vue d'une transmission commune de données utiles et de test (N, P) à l'ordinateur de communication côté source (KQ) qui n'est pas à sécurité intrinsèque en vue de la transmission à l'ordinateur de communication côté collecteur correspondant (KS) qui n'est pas à sécurité intrinsèque,
l'ordinateur de communication côté collecteur (KS) qui n'est pas à sécurité intrinsèque est adapté pour former à partir des données utiles transmises (N) les fragments de données de test associés (P*) et pour transmettre ceux-ci ainsi que les données utiles et de test reçues (N, P) à l'ordinateur côté collecteur (SRS) à sécurité intrinsèque
et cet ordinateur (SRS) est adapté pour exécuter les étapes de calcul manquantes (Fn) sur les fragments de données de test (P*) ou sur les données utiles et les fragments de données de test (N, P*) et pour comparer les données de test ainsi obtenues (P**) pour la reconnaissance des données utiles transmises (N) aux données de test transmises (P).

8. Dispositif selon la revendication 7,
**caractérisé par le fait que**, à chaque fois, des ordinateurs de communication communs (KQ, KS) qui ne sont pas à sécurité intrinsèque sont adaptés à la transmission des données utiles et de test (N, P) ainsi qu'au calcul des fragments de données de test (P*).

9. Dispositif selon la revendication 7,
**caractérisé par le fait qu'**un canal commun ou des canaux particuliers sont prévus pour la transmission des données de test (P) adjointes aux données utiles (N) à partir de l'ordinateur de communication côté collecteur (KS) qui n'est pas à sécurité intrinsèque ainsi que pour la transmission des données de test incomplètes calculées là (P*) à l'ordinateur côté collecteur (SRS) à sécurité intrinsèque.
